# EUROPÄISCHE PATENTSCHRIFT

(11) **EP 1 535 810 B1**
(45) Veröffentlichungstag und Bekanntmachung des Hinweises auf die Patenterteilung: **28.02.2007**
(21) Anmeldenummer: 04025677.8
(22) Anmeldetag: 28.10.2004
(51) Int. Cl.: B60R 21/26

(54) **Gasgenerator**
Gas generator
Générateur de gaz

(30) Priorität: 26.11.2003 DE 20318283 U
(43) Veröffentlichungstag der Anmeldung: 01.06.2005
(73) Patentinhaber: TRW Airbag Systems GmbH, 84544 Aschau am Inn (DE)
(72) Erfinder: Engler, Henri, 18146 Rostock (DE); Englbrecht, Karl, 84513 Erharting (DE); Zauhar, Andreas, 84489 Burghausen (DE); Kapfelsperger, Thomas, 84453 Mühldorf (DE); Schachtner, Andreas, 84329 Wurmannsquick (DE)
(74) Vertreter: Kitzhofer, Thomas

(56) Entgegenhaltungen:
- EP-A- 0 672 562
- WO-A-98/39181
- DE-A1- 19 528 864
- US-A- 4 249 673

## Beschreibung

Die Erfindung betrifft einen Gasgenerator, mit einer einen pyrotechnischen Treibsatz enthaltenden Brennkammer und einer den Treibsatz vorspannenden Vorspanneinheit.

Der gattungsbildende Stand der Technik ist z.B. aus dem Dokument EP 0 672 562 A1 bekannt.

Der in einem Gasgenerator für Fahrzeuginsassen-Rückhaltesysteme untergebrachte Treibsatz wird mechanisch vorgespannt, damit er sich während des jahrelangen Fahrbetriebes nicht bewegen kann. Insbesondere bei einer tablettenförmigen Treibsatzschüttung ist dies wichtig, denn die Tabletten würden gegenseitig aneinanderreiben und sich abnützen. Die bisher verwendeten Vorspanneinheiten sind beispielsweise Federn oder Schaumstoffeinsätze. Ein pyrotechnischer Gasgenerator wird üblicherweise mittels Verschweißen geschlossen, wobei hier ausgeschlossen werden muß, daß durch Funkensprung während des Schweißens der pyrotechnische Treibsatz entzündet wird.

Die Erfindung schafft einen Gasgenerator, der einfach zu befüllen ist und dessen Einzelteile einfach miteinander verschweißt werden können.

Der erfindungsgemäße Gasgenerator nach der eingangs genannten Art ist durch eine Halteeinrichtung gekennzeichnet, die die Vorspanneinheit in einer vorbestimmten, lagegesicherten, komprimierten Stellung hält und die lösbar ausgebildet ist, um die Vorspanneinheit wahlweise freizugeben, so daß sie in eine Freigabestellung gelangt, in der sie eine Vorspannkraft auf den Treibsatz ausübt.

Die bislang üblichen Vorspanneinheiten, z.B. Federn, wurden üblicherweise zuerst in die Brennkammer eingeführt, anschließend wurde der Treibsatz in die Brennkammer unter Aufbringung äußerer Kräfte hineingedrückt, so daß sich die Feder komprimierte. Wieder andere Systeme sahen vor, daß die einseitig offene Brennkammer nach dem Befüllen des Treibsatzes mit einem Deckel geschlossen wird, an dessen Innenseite die Vorspanneinheit sitzt.

Die Erfindung hingegen sieht vor, daß die Vorspanneinheit zum Befüllen des Gasgenerators aufgrund der Halteeinrichtung in einer komprimierten Stellung gehalten wird, ohne daß sie hierbei die Vorspannkraft auf den Treibsatz ausübt. In dieser Stellung ist die Vorspanneinheit stärker komprimiert als in der anschließenden Freigabestellung, in der sie erst die Vorspannkraft auf den Treibsatz ausübt und sich eine nicht lagegesicherte Stellung ergibt, die aus einem Kräftegleichgewicht zwischen der Vorspanneinheit und dem Gegendruck des Treibsatzes resultiert. Aufgrund der lagegesicherten, komprimierten Stellung kann der Treibsatz eingefüllt werden, ohne daß während der Befüllung und des anschließenden Schließens der Brennkammer Druck auf den Treibsatz ausgeübt werden muß. Darüber hinaus erlaubt die komprimierte Stellung, die Brennkammer vor ihrem Schließen nicht komplett mit Treibsatz zu füllen, so daß der Treibsatz beim Schließen der Brennkammer insbesondere durch Verschweißen von dieser Verbindungsstelle ausreichend beabstandet sein kann. Es besteht also keine Gefahr einer Entzündung des Treibsatzes beim Schließen des Generators oder der Brennkammer. Erst nach dem Schließen kann die Halteeinrichtung gelöst werden, wodurch die Vorspanneinheit in die Freigabestellung gelangt.

Die Halteeinrichtung ist gemäß der bevorzugten Ausführungsform eine mechanische Verriegelung, die beispielsweise an der Brennkammerwand, am Außengehäuse des Gasgenerators oder, gemäß der bevorzugten Ausführungsform an einem anderen Abschnitt der Vorspanneinheit angreift, so daß diese im letzteren Fall eine in sich geschlossene Einheit bildet, die sich selbst in der komprimierten Stellung stabil hält.

Die Vorspanneinheit sollte eine vormontierte Einheit sein, die als solche bereits in der komprimierten Stellung in die Brennkammer eingesetzt werden kann, was die Montage erleichtert.

Die Vorspanneinheit besitzt z.B. eine dem Treibsatz zugewandte Vorderwand, eine dem Treibsatz abgewandte Rückwand sowie ein dazwischenliegendes elastisches Federelement, ist also aus sehr wenigen Teilen aufgebaut.

Die Vorder- und die Rückwand werden wahlweise durch die Halteeinrichtung in der komprimierten Stellung fest und bei konstantem Abstand miteinander verbunden und sind in der Freigabestellung voneinander entkoppelt. "Entkoppelt" heißt, die Vorder- und die Rückwand sind so voneinander gelöst, daß sich die Vorderwand frei gegen den Treibsatz bewegen kann.

Die Halteeinrichtung umfaßt beispielsweise von der Vorderwand abstehende Fortsätze, die z.B. an der Rückwand angreifen. Natürlich könnte auch umgekehrt die Rückwand die Fortsätze tragen, die an der Vorderwand angreifen.

Zum einfachen und schnellen Lösen ist bevorzugt vorgesehen, daß die Halteeinrichtung einen Drehverschluß, insbesondere Bajonettverschluß aufweist und durch Drehen des Verschlusses die Freigabestellung erreicht.

Die Brennkammer ist außenseitig durch eine Brennkammerwand begrenzt, wobei die Vorspanneinheit an einem axialen Ende der vorzugsweise langgestreckten, zylindrischen Brennkammer liegt. Das gegenüberliegende Ende der Brennkammer ist die Befüllseite für den Treibsatz und diejenige Seite der Brennkammer oder des gesamten Generators, die nach dem Befüllen insbesondere durch Schweißen verschlossen wird.

Die Vorspanneinheit wird insbesondere über das befüllseitige axiale Ende in die Brennkammer eingeführt und liegt seitlich an dieser stabil an, so daß die Bewegung der Vorspanneinheit nur in einer Richtung erfolgen kann.

Die Vorspanneinheit ist ungesichert in der Brennkammer untergebracht, wie eine Ausführungsform vorsieht, d.h. eine formschlüssige Verbindung zwischen der Brennkammerwand und der Vorspanneinheit ist nicht erforderlich. Die Vorspanneinheit ist vielmehr zwischen einem axialen Ende der Brennkammerwand und dem Treibsatz eingespannt.

Die Erfindung ist nicht auf rein pyrotechnische Gasgeneratoren beschränkt. Die bevorzugte Ausführungsform sieht sogar einen langgestreckten Hybrid-Gasgenerator vor, bei dem die Brennkammer von einer gasgefüllten Druckkammer umgeben ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische teilgeschnittene Ansicht eines erfindungsgemäßen Gasgenerators,
- Figur 2 eine etwas modifizierte Ausführungsform des in Figur 1 bereits dargestellten Brennkammereinsatzes mit integrierter Vorspanneinheit, und
- Figur 3 eine Draufsicht auf die Rückwand der bei der Erfindung eingesetzten Vorspanneinheit.

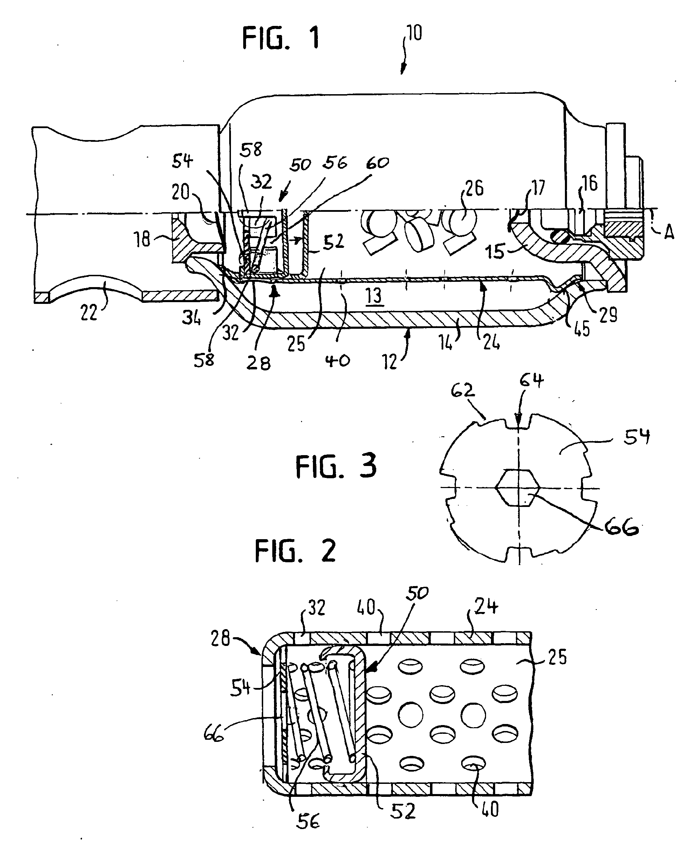

In Figur 1 ist ein Hybrid-Gasgenerator 10 gezeigt, mit einem langgestreckten, zylindrischen Außengehäuse 12, das eine Druckkammer umschließt, die mit einem unter Druck stehenden Medium 13, z.B. einem Edelgas wie Argon oder Helium gefüllt ist. Das Außengehäuse 12 hat eine langgestreckte Form und besitzt eine Umfangswand 14, die sich in Axialrichtung A an beiden Enden des Gasgenerators 10 konisch verjüngt.

An einem axialen Einfüllende des Gasgenerators 10 befinden sich ein topfförmiger Deckel 15 und eine mit ihm verbundene Anzündeinheit 16, die von konventionellen Hybrid-Gasgeneratoren bekannt ist. Im hier gezeigten Beispiel ist die Anzündeinheit 16 gegenüber der Druckkammer durch eine Membran 17 geschlossen, die bei der Aktivierung der Anzündeinheit 16 zerstört wird. Am gegenüberliegenden axialen Ende des Gasgenerators 10 sind Ausströmöffnungen 22 sowie eine Drosselvorrichtung 18 und eine Verschlußmembran 20 vorgesehen. Nach Öffnen der Verschlußmembran 20 ist die Druckkammer strömungsmäßig über die Drosselvorrichtung 18 mit den Ausströmöffnungen 22 verbunden, so daß Gas aus dem Gasgenerator 10 entweichen kann.

Im Inneren des Außengehäuses 12 ist eine langgestreckte Brennkammerwand 24 wie ein Einsatz aufgenommen, in welchem die Brennkammer 25 ausgebildet ist, die mit einem tablettenförmigen Treibsatz 26 gefüllt ist. Der Treibsatz 26 ist ausschließlich in der Brennkammer 25 untergebracht. Ein erstes axiales Ende 28 der Brennkammer 25 grenzt an die Drosselvorrichtung 18 an, während ein zweites axiales Ende 29 der Brennkammer 25, auch Einfüllende genannt, auf Seiten der Anzündeinheit 16 liegt.

Die Brennkammerwand 24 ist durch ein Lochblech hergestellt und begrenzt die Brennkammer radial nach außen. Die Brennkammerwand 24 hat am ersten Ende 28 große Durchströmöffnungen 32 und endet am ersten Ende 28 in einer kegelstumpfförmigen Abschrägung 34. Über ihren gesamten Umfang verteilt weist die rohrförmige Brennkammerwand 24 zusätzlich kleinere Öffnungen 40 auf.

Am zweiten Ende 29 ist ebenfalls eine Abschrägung 45 vorgesehen, mit der sich die Brennkammerwand 24 an der sich in diesem Bereich konisch verjüngenden Umfangswand 14 abstützt. Durch die Abschrägungen 34, 45 ist die Brennkammerwand 24 sowohl radial als auch axial in dem Außengehäuse 12 lagefixiert.

Im Bereich des Endes 28 liegt eine Vorspanneinheit 50 in der Brennkammer 25 und sorgt dafür, daß der Treibsatz 26 vorgespannt ist.

Die Vorspanneinheit 50 besteht aus drei Teilen, wie es in Figur 2 einfacher zu erkennen ist, nämlich aus einer Vorderwand 52, die in Figur 1 in zwei Stellungen dargestellt ist, einer mit einer großen Durchströmöffnung versehenen, ringförmigen Rückwand 54 und einer zwischen den Wänden 52, 54 angeordneten, symbolisch dargestellten Feder 56, die bestrebt ist, die beiden Wände 52, 54 axial voneinander zu entfernen. Die Vorderwand 52 ist kronenförmig ausgebildet und hat zur Rückwand 54 weisende, einstückig angeformte fingerförmige Fortsätze an ihrem Außenrand, und zwar am Umfang verteilt vier längere, die Rückwand 54 in einer Stellung (komprimierte Stellung) hintergreifende Fortsätze 58, sowie zwischen den längeren Fortsätzen 58 im Gegensatz zu diesen am freien Ende nicht abgewinkelte, kurze Fortsätze 60, die am stirnseitigen freien Ende an der Rückwand 54 in der sogenannten komprimierten Stellung der Vorspanneinheit 50 anliegen.

Die Vorspanneinheit 50 ist eine in sich geschlossene, vormontierte Einheit, wobei die Fortsätze 58, 60 eine Halteeinrichtung zwischen den beiden Wänden 52, 54 bilden und Teil eines Bajonettverschlusses, also allgemein eines Drehverschlusses, sind. Die abgewinkelten längeren Fortsätze 58 ragen nämlich durch am Außenrand der Rückwand 54 abschnittsweise vorgesehene Ausnehmungen 62 (siehe Fig. 3) hindurch, die sich zu Durchsteckausnehmungen 64 radial nach innen erweitern.

Die Vorspanneinheit 50 wird folgendermaßen vormontiert. In die topfförmige Vorderwand 52 wird die Feder 56 eingelegt. Anschließend wird von der Rückseite aus die Rückwand 54 aufgesetzt, wobei die langen Fortsätze 58 mit den Ausnehmungen 64 fluchten, so daß die Rückwand 54 nahe zur Vorderwand 52 entgegen der Federkraft gedrückt und anschließend wie ein Bajonettverschluß verdreht werden kann und so die Fortsätze 58 schließlich in den Bereichen der Ausnehmungen 62 liegen. In diesem Zustand ist die Vorspanneinheit 50 eine in sich geschlossene Einheit mit einer darin enthaltenen komprimierten Feder, wobei die Vorder- und die Rückwand 52, 54 auf einem festen Abstand lagegesichert gehalten sind.

Zur Erleichterung der Verdrehung von Vorderwand 52 und Rückwand 54 zueinander ist in der Rückwand 54 die Durchströmöffnung 66 als Sechskant ausgeführt. Alternativ könnte natürlich diese Durchströmöffnung 66 größer ausgeführt sein und anstatt dessen in der Vorderwand 52 eine Vertiefung oder Ausnehmung zum Durchstecken eines Werkzeugs ausgebildet sein.

In dieser komprimierten Stellung wird die Vorspanneinheit 50 vom axialen Ende 29 aus in die Brennkammer 25 eingeschoben, wobei der Außendurchmesser der Wände 52, 54 auf den Innendurchmesser der Brennkammerwand 24 fast spielfrei abgestimmt ist. Die einwärts gerichteten, hakenförmigen Enden der langen Fortsätze 58 liegen dann an einem Absatz im Bereich der Abschrägung 34 an (linke Stellung der Vorderwand 52 in Figur 1). Dieses Einsetzen der Vorspanneinheit 50 erfolgt bei aufgestelltem Gasgenerator, wenn das Ende 29 nach oben zeigt. Anschließend wird der Treibsatz 26 eingefüllt, wobei die Brennkammer 25 nicht komplett vollgefüllt wird. Schließlich wird die Einheit aus Deckel 15 und Anzündeinheit 16 von oben auf die noch nicht verschlossene Öffnung im Außengehäuse aufgesetzt. Schließlich werden Umfangswand 14 und Deckel 15 im nach wie vor aufgestellten Zustand des Gasgenerators verschweißt. Aufgrund der komprimierten, kompakten Vorspanneinheit steht so viel zusätzliches Volumen in der Brennkammer 25 für den Treibsatz 26 zur Verfügung, daß dieser beim Schweißvorgang nicht mit dem Deckel 15 in Kontakt kommt, so daß ein Spalt zwischen der Treibsatzschüttung und dem Deckel 15 ist.

Nach dem Verschweißen wird über die linke, noch offene Seite mittels eines Sechskantwerkzeugs die Rückwand 54 verdreht, so daß die Fortsätze 58 aus den Ausnehmungen 64 heraustreten können und die Vorderwand 52 axial in Pfeilrichtung nach Figur 1 gegen den Treibstoff drückt und von der Rückwand 54 entkoppelt ist. Die sich dann ergebende, in Figur 1 gezeigte rechte Stellung der Vorderwand 52 ist die sogenannte Freigabestellung, in der die Vorspanneinheit 50 eine Vorspannkraft auf den Treibsatz 26 ausübt, der dabei nach rechts wandert und zwischen dem Deckel 15 und der Vorderwand 52 geklemmt ist.

Anschließend wird der Gasgenerator 10 mit Druckgas über die linke, offene Stirnseite befüllt und schließlich mittels der Einheit aus Drosselvorrichtung 18 und Verschlußmembran 20 geschlossen. Dieses Verschließen erfolgt vorzugsweise ebenfalls durch Schweißen.

Bei der Ausführungsform nach Figur 2 ist lediglich das erste Ende 28 etwas anders ausgeformt. Die Vorspanneinheit 50 ist in der Freigabestellung dargestellt, zu Zwecken der Übersichtlichkeit ist der Treibsatz 26 weggelassen.

## Patentansprüche

1. Gasgenerator, mit einer einen pyrotechnischen Treibsatz (26) enthaltenden Brennkammer (25) und
einer den Treibsatz (26) vorspannenden Vorspanneinheit (50),
**gekennzeichnet durch** eine Halteeinrichtung, die die Vorspanneinheit (50) in einer vorbestimmten, lagegesicherten, komprimierten Stellung hält und die lösbar ausgebildet ist, um die Vorspanneinheit (50) wahlweise freizugeben, so daß sie in eine Freigabestellung gelangt, in der sie eine Vorspannkraft auf den Treibsatz (26) ausübt.

2. Gasgenerator nach Anspruch 1, **dadurch gekennzeichnet, daß** die Halteeinrichtung eine mechanische Verriegelung aufweist.

3. Gasgenerator nach Anspruch 1 oder 2, **dadurch gekennzeichnet, daß** die Vorspanneinheit (50) eine in sich geschlossene Einheit bildet, die sich selbst in der komprimierten Stellung hält.

4. Gasgenerator nach einem der vorhergehenden Ansprüche, **dadurch gekennzeichnet, daß** die Vorspanneinheit (50) eine vormontierte Einheit ist.

5. Gasgenerator nach einem der vorhergehenden Ansprüche, **dadurch gekennzeichnet, daß** die Vorspanneinheit (50) ein Federelement (56) aufweist.

6. Gasgenerator nach einem der vorhergehenden Ansprüche, **dadurch gekennzeichnet, daß** die Vorspanneinheit eine dem Treibsatz (26) zugewandte Vorderwand (52), eine dem Treibsatz (26) abgewandte Rückwand (54) sowie ein dazwischenliegendes elastisches Federelement (56) hat.

7. Gasgenerator nach Anspruch 6, **dadurch gekennzeichnet, daß** die Vorder- und die Rückwand (52, 54) durch die Halteeinrichtung wahlweise in der komprimierten Stellung fest und auf konstantem Abstand miteinander verbunden oder, in der Freigabestellung, voneinander entkoppelt sind.

8. Gasgenerator nach einem der vorhergehenden Ansprüche, **dadurch gekennzeichnet, daß** die Halteeinrichtung von der Vorderwand (52) abstehende Fortsätze (58, 60) besitzt.

9. Gasgenerator nach den Ansprüchen 7 und 8, **dadurch gekennzeichnet, daß** die Fortsätze (58) an der Rückwand (54) angreifen.

10. Gasgenerator nach einem der vorhergehenden Ansprüche, **dadurch gekennzeichnet, daß** die Halteeinrichtung einen Drehverschluß, insbesondere Bajonettverschluß, umfaßt und durch Drehen des Verschlusses die Freigabestellung erreicht.

11. Gasgenerator nach einem der vorhergehenden Ansprüche, **dadurch gekennzeichnet, daß** die Vorspanneinheit (50) an einem axialen Ende (28) der Brennkammer (25) liegt.

12. Gasgenerator nach einem der vorhergehenden Ansprüche, **dadurch gekennzeichnet, daß** die Vorspanneinheit (50) über ein axiales Ende (29) in die Brennkammer (25) eingeführt ist und seitlich an einer Brennkammerwand (24) anliegt.

13. Gasgenerator nach einem der vorhergehenden Ansprüche, **dadurch gekennzeichnet, daß** die Vorspanneinheit (50) in Richtung zum Treibsatz (26) als Einheit ungesichert in der Brennkammer (25) untergebracht ist.

14. Gasgenerator nach einem der vorhergehenden Ansprüche, **dadurch gekennzeichnet, daß** er ein langgestreckter Hybrid-Gasgenerator ist.

15. Gasgenerator nach Anspruch 14, **dadurch gekennzeichnet, daß** die Brennkammer (25) von einer gasgefüllten Druckkammer umgeben ist.

16. Gasgenerator nach einem der vorhergehenden Ansprüche, **dadurch gekennzeichnet, daß** der Gasgenerator ein Einfüllende für den Treibsatz (26) hat, welches mit einem Deckel (15) verschlossen ist, und daß die Menge des in der Brennkammer (25) eingefüllten Treibsatzes (26) und der Volumenunterschied der Brennkammer zwischen der komprimierten Stellung und der Freigabestellung der Vorspanneinheit (50) so groß ist, daß bei nach oben weisendem Einfüllende und sich in komprimierter Stellung befindlicher Vorspanneinheit (50) der aufgesetzte Deckel (15) vom Treibsatz (26) beabstandet ist, in der Freigabestellung der Treibsatz (26) jedoch gegen den Deckel (15) drückt.

## Claims

1. A gas generator comprising a combustion chamber (25) containing a pyrotechnic propellant charge (26), and
a biasing unit (50) that biases the propellant charge (26),
**characterized by** a holding means which holds the biasing unit (50) in a predetermined, fixed, compressed position and which is designed to be releasable so as to selectively release the biasing unit (50), so that it reaches a release position, in which it exerts a biasing force on the propellant charge (26).

2. The gas generator as recited in Claim 1, **characterized in that** the holding means has a mechanical locking means.

3. The gas generator as recited in Claim 1 or 2, **characterized in that** the biasing unit (50) constitutes a self-contained unit, which holds itself in the compressed position.

4. The gas generator as recited in any of the preceding claims, **characterized in that** the biasing unit (50) is a preassembled unit.

5. The gas generator as recited in any of the preceding claims, **characterized in that** the biasing unit (50) includes a spring element (56).

6. The gas generator as recited in any of the preceding claims, **characterized in that** the biasing unit has a front wall (52) facing the propellant charge (26), a rear wall (54) facing away from the propellant charge (26), and an elastic spring element (56) situated in between.

7. The gas generator as recited in Claim 6, **characterized in that** the front and rear walls (52, 54) are selectively connected to each other by the holding means firmly and at a constant distance in the compressed position, or are uncoupled from each other in the release position.

8. The gas generator as recited in any of the preceding claims, **characterized in that** the holding means has extensions (58, 60) that protrude from the front wall (52).

9. The gas generator as recited in Claims 7 and 8, **characterized in that** the extensions (58) engage the rear wall (54).

10. The gas generator as recited in any of the preceding claims, **characterized in that** the holding means includes a turning lock, in particular a bayonet lock, and attains the release position by turning the lock.

11. The gas generator as recited in any of the preceding claims, **characterized in that** the biasing unit (50) is situated at an axial end (28) of the combustion chamber (25).

12. The gas generator as recited in any of the preceding claims, **characterized in that** the biasing unit (50) is inserted in the combustion chamber (25) via an axial end (29) and laterally contacts a combustion chamber wall (24).

13. The gas generator as recited in any of the preceding claims, **characterized in that** the biasing unit (50) is accommodated in the combustion chamber (25) as a unit in an unsecured fashion facing the propellant charge (26).

14. The gas generator as recited in any of the preceding claims, **characterized in that** it is an elongated hybrid gas generator.

15. The gas generator as recited in Claim 14, **characterized in that** the combustion chamber (25) is surrounded by a gas-filled pressure chamber.

16. The gas generator as recited in any of the preceding claims, **characterized in that** the gas generator has a filling end for the propellant charge (26), the filling end being closed by a cover (15), and that the quantity of the propellant charge (26) that is placed in the combustion chamber (25) and the volume differential of the combustion chamber between the compressed position and the release position of the biasing unit (50) is so large that, when the filling end is pointing upwards and the biasing unit (50) is in the compressed position, the cover (15), when in place, is spaced away from the propellant charge (26), whereas in the release position the propellant charge (26) presses against the cover (15).

## Revendications

1. Générateur de gaz comportant une chambre de combustion (25) contenant une charge propulsive (26) pyrotechnique et
une unité de précontrainte (50) qui précontraint la charge propulsive (26),
**caractérisé par** un dispositif de retenue qui maintient l'unité de précontrainte (50) dans une position prédéterminée, fixée et comprimée et qui est réalisée détachable pour libérer sélectivement l'unité de précontrainte (50) de telle sorte qu'elle parvient dans une position de libération dans laquelle elle exerce une force de précontrainte sur la charge propulsive (26).

2. Générateur de gaz selon la revendication 1, **caractérisé en ce que** le dispositif de retenue présente un verrouillage mécanique.

3. Générateur de gaz selon la revendication 1 ou 2, **caractérisé en ce que** l'unité de précontrainte (50) forme une unité fermée en soi qui se maintient elle-même dans la position comprimée.

4. Générateur de gaz selon l'une des revendications précédentes, **caractérisé en ce que** l'unité de précontrainte (50) est une unité préassemblée.

5. Générateur de gaz selon l'une des revendications précédentes, **caractérisé en ce que** l'unité de précontrainte (50) présente un élément à effet de ressort (56).

6. Générateur de gaz selon l'une des revendications précédentes, **caractérisé en ce que** l'unité de précontrainte a une paroi antérieure (52) tournée vers la charge propulsive (26), une paroi postérieure (54) détournée de la charge propulsive (26) ainsi qu'un élément à effet de ressort (56) élastique situé entre elles.

7. Générateur de gaz selon la revendication 7, **caractérisé en ce que** la paroi antérieure et la paroi postérieure (52, 54) sont sélectivement reliées l'une à l'autre par le dispositif de retenue, fermement et à distance constante dans la position comprimée ou sont découplées l'une de l'autre dans la position de libération.

8. Générateur de gaz selon l'une des revendications précédentes, **caractérisé en ce que** le dispositif de retenue possède des prolongements (58, 60) faisant saillie depuis la face antérieure (52).

9. Générateur de gaz selon les revendications 7 et 8, **caractérisé en ce que** les prolongements (58) s'engagent sur la paroi postérieure (54).

10. Générateur de gaz selon l'une des revendications précédentes, **caractérisé en ce que** le dispositif de retenue comprend une fermeture rotative, en particulier une fermeture à baïonnette et atteint la position de libération en faisant tourner la fermeture.

11. Générateur de gaz selon l'une des revendications précédentes, **caractérisé en ce que** l'unité de précontrainte (50) est située à une extrémité axiale (28) de la chambre de combustion (25).

12. Générateur de gaz selon l'une des revendications précédentes, **caractérisé en ce que** l'unité de précontrainte (50) est introduite via une extrémité axiale (29) dans la chambre de combustion (25) et est en appui latéralement sur une paroi (24) de la chambre de combustion.

13. Générateur de gaz selon l'une des revendications précédentes, **caractérisé en ce que** l'unité de précontrainte (50) est logée sous forme d'unité de manière non sécurisée dans la chambre de combustion (25) en direction de la charge propulsive (26).

14. Générateur de gaz selon l'une des revendications précédentes, **caractérisé en ce qu'**il est un générateur de gaz hybride allongé.

15. Générateur de gaz selon la revendication 14, **caractérisé en ce que** la chambre de combustion (25) est entourée par une chambre de pression remplie de gaz.

16. Générateur de gaz selon l'une des revendications précédentes, **caractérisé en ce que** le générateur de gaz présente une extrémité de remplissage pour la charge propulsive (26), laquelle est fermée par un couvercle (15), et **en ce que** la quantité de la charge propulsive (26) remplie dans la chambre de propulsion (25) et la différence de volume de la chambre de combustion entre la position comprimée et la position de libération de l'unité de précontrainte (50) sont si importantes que lorsque l'extrémité de remplissage est tournée vers le haut et l'unité de précontrainte (50) se trouve en position comprimée, le couvercle (15) mis en place est espacé de la charge propulsive (26) alors que dans la position de libération, la charge propulsive (26) presse toutefois contre le couvercle (15).
